**Europäisches Patentamt**

**European Patent Office**

**Office européen des brevets**

(19)

(11) Veröffentlichungsnummer : **0 256 588 B1**

## (12) EUROPÄISCHE PATENTSCHRIFT

(45) Veröffentlichungstag der Patentschrift :
**09.01.91 Patentblatt 91/02**

(51) Int. Cl.$^5$ : **B01D 47/08**, B01D 53/34, B01J 19/00

(21) Anmeldenummer : **87201456.8**

(22) Anmeldetag : **30.07.87**

(54) Sprühabsorber.

(30) Priorität : **08.08.86 DE 3626919**

(43) Veröffentlichungstag der Anmeldung :
**24.02.88 Patentblatt 88/08**

(45) Bekanntmachung des Hinweises auf die
Patenterteilung :
**09.01.91 Patentblatt 91/02**

(84) Benannte Vertragsstaaten :
**AT CH DE ES FR IT LI NL**

(56) Entgegenhaltungen :
**EP-A- 0 191 557
US-A- 4 452 765
US-A- 4 585 633**

(73) Patentinhaber : **METALLGESELLSCHAFT AG**
**Reuterweg 14 Postfach 3724**
**D-6000 Frankfurt/M.1 (DE)**

(72) Erfinder : **Michler, Wilhelm**
**Am Hessenborn 2**
**D-6000 Frankfurt 60 (DE)**
Erfinder : **Both, Hans Walter**
**Schönberger Weg 6**
**D-6231 Schwalbach (DE)**
Erfinder : **Keppler, Rolf**
**Dehnhardstrasse 73**
**D-6000 Frankfurt 50 (DE)**

(74) Vertreter : **Rieger, Harald, Dr.**
**Reuterweg 14**
**D-6000 Frankfurt a.M. (DE)**

## Beschreibung

Die Erfindung bezieht sich auf einen Sprühabsorber für vertikalen Gasdurchgang, bestehend im wesentlichen aus einem zylindrischen Gehäuse mit einem Gaseintrittsstutzen im Deckenbereich und einem Gasaustrittsstutzen im Bereich des unten angeschlossenen Staubsammelbunkers, einem zentrisch im Deckenbereich angeordneten Rotations-Sprühaggregat und konzentrisch dazu montierten Gasleiteinrichtungen.

Derartige Sprühabsorber werden bei der Reinigung von Abgasen eingesetzt, wobei eine Flüssigkeit, in der geeignete Absorbentien gelöst oder suspendiert sind, zerstäubt und mit dem Gasstrom gemischt wird. Häufig wird eine Aufschlämmung von Kalziumhydroxid in Wasser benutzt und mittels Fliehkraft in den Gasstrom verteilt. Wegen der erosiven Wirkung der Suspension müssen die Rotations-Sprühaggregate von Zeit zu Zeit ausgewechselt werden. Dieses Auswechseln erfolgt normalerweise, ohne daß der Gasdurchgang durch die Sprühabsorber gesperrt werden muß, weil letztere im allgemeinen bei leichtem Unterdruck arbeiten, so daß beim Auswechseln der Aggregate keine Gase austreten können und nur gewisse Mengen Umgebungsluft vom Gasstrom aufgenommen werden.

Diese Handhabung kann jedoch nicht in allen Fällen angewendet werden. So können beispielsweise Rotationssprühaggregate dann nicht ohne Abschaltung des Gasstromes ausgetauscht werden, wenn der Gasstrom zündfähige Bestandteile enthält und durch das unfreiwillige Zumischen von Luft explosible Gemische entstehen können. Auch bei Abgasen, die sehr heiß sind oder toxische Begleitelemente enthalten, kann ein Auswechseln der Rotationssprühaggregate ohne Absperrung des Gasdurchgangs aus Sicherheitsgründen nicht durchgeführt werden. Schließlich ist die genannte Handhabung auch dann nicht möglich, wenn bei nur geringem Unterdruck mit Druckschwankungen im Gasführungssytem gerechnet werden muß, wobei dann trotz betriebsmäßigem Unterdruck zeitweilig gewisse Gasmengen durch die Montagöffnung austreten können.

Es besteht somit die Aufgabe einen Sprühabsorber der eingangs genannten Art derart auszubilden, daß das betriebsbedingte Auswechseln des Rotationssprühaggregates bei nicht abgeschaltetem Gasdurchgang durchgeführt werden kann, ohne daß die vogenannten Nachteile auftreten.

Zur Lösung dieser Aufgabe wird vorgeschlagen, eine heb- und schwenkbare Abdeckhaube vorzusehen, mit der die Schachtöffnung für das Rotationssprühaggregat von unten her verschließbar ist. Außerdem ist vorgesehen, daß die Abdeckhaube in einer außerhalb des Gasströmungsraumes liegende Parknische des Deckenbereichs schwenk- und hebbar ist. Zweckmäßigerweise wird die Abdeckhaube über einen Tragarm mit einer vertikal angeordneten, axial verschiebbaren Welle verbunden. In weiterer Ausbildung des Erfindungsgedankens ist vorgesehen, daß die Parknische bei eingefahrener Abdeckhaube durch ein am Tragarm befestigtes Blech abgedeckt ist. Die vertikale Welle ist im wesentlichen außerhalb des Gehäuses angeordnet und mittels Stopfbuchslager durch den Deckenbereich in den Gasströmungsraum hineingeführt.

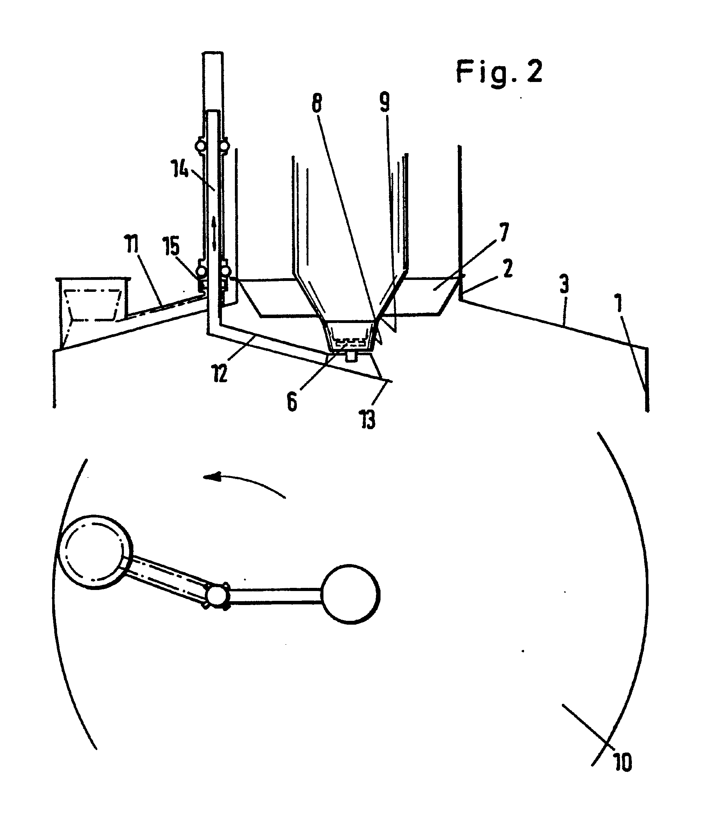

Weitere Einzelheiten und Vorteile werden anhand des in den Figuren 1 bis 3 dargestellten Ausführungsbeispiels näher erläutert.

Figur 1 zeigt einen Vertikalschnitt durch einen Sprühabsorber herkömmlicher Bauart.

Figur 2 zeigt im vertikalen und horizontalen Teilschnitt den oberen Teil des Sprühabsorbers mit erfindungsgemäßer Abdeckhaube.

Figur 3 zeigt den zentralen Bereich gemäß Figur 2 noch einmal in vergrößerter Darstellung.

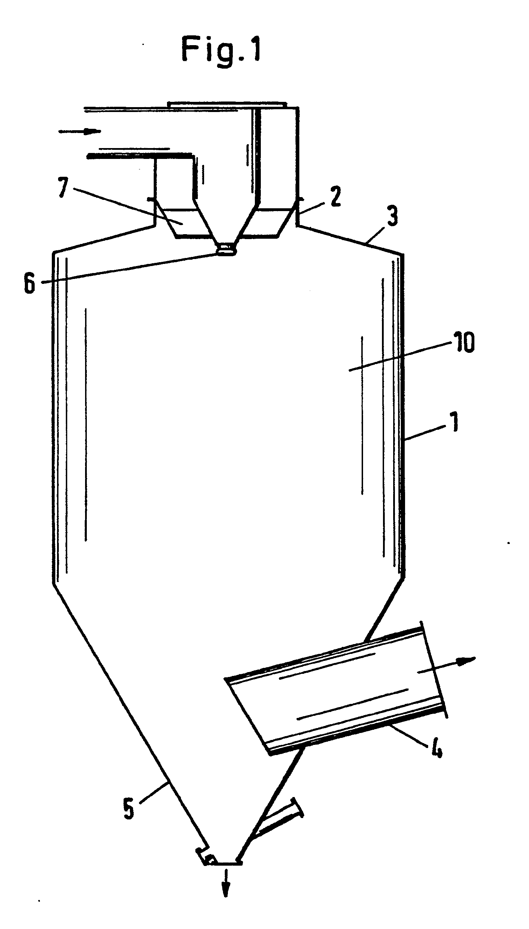

Der in Figur 1 dargestellte Sprühabsorber besteht im wesentlichen aus einem zylindrischen Gehäuse (1) mit einem Gaseintrittsstutzen (2) im Deckenbereich (3) und einem Gasaustrittsstutzen (4) im Bereich des unten angeschlossenen Staubsammelbunkers (5). Ferner sind zentrisch im Deckenbereich (3) ein Rotationssprühaggregat (6) und konzentrisch dazu montierte Gasleiteinrichtungen (7) vorgesehen. Das zu reinigende Abgas wird über den Gaseintrittsstutzen (2) in den Gasströmungsraum (10) eingeleitet, wobei die Gasleiteinrichtungen (7) dafür sorgen, daß eine optimale Vermischung mit dem vom Rotationssprühaggregat verstäubten Absorbens gewährleistet ist. Im Gasströmungsraum (10) finden die Austauschvorgänge zwischen den Gasverunreinigungen und dem Absorbens statt, bevor das Gas durch den Gasaustrittsstutzen (4) aus dem Sprühabsorber abgeführt wird. Dabei verdampft die Suspensionsflüssigkeit im allgemeinen vollständig, so daß über den Staubsammelbunker (5) ein pulverförmiges Material abgezogen werden kann, das im wesentlichen die Gasverunreinigungen enthält.

Wenn das Rotationssprühaggregat (6) ausgetauscht werden muß, bildet die Montageöffnung (9) für das Rotationssprühaggregat (6) zwangsläufig eine Öffnung zwischen Gasströmungsraum (10) und Umgebung, die erfindungsgemäß mit einer heb- und schwenkbaren Abdeckhaube (8) verschlossen werden kann. Diese Abdeckhaube (8) ist über einen Tragarm (12) mit einer vertikal angeordneten, axial verschiebbaren Welle (14) verbunden. Sie läßt sich dadurch bei Nichtgebrauch in eine Parknische (11) einfahren, die durch ein am Tragarm (12) befestigtes Blech (13) gegen den Gasströmungsraum (10) hin abgedeckt ist. Die Welle (14) ist im wesentlichen außerhalb des Gehäuses (1) angeordnet und mittels Stopfbuchslager durch den Deckenbereich (3) in den Gasströmungsraum (10) hineingeführt. Mit (2) ist wiederum der Gaseintrittsstutzen und mit (7) wiederum die Gasleiteinrichtung bezeichnet.

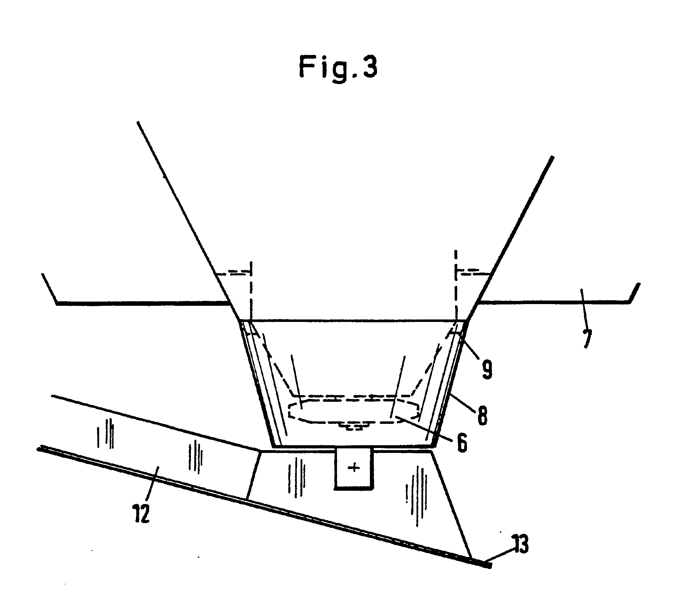

In der vergrößerten Darstellung gemäß Figur 3 sind die gleichen Bezugsziffern verwendet worden. Weitere Ausführungen hierfür sind nicht erforderlich.

Selbstverständlich können bei Bedarf in der Abdeckhaube am oberen Rand noch Dichtungsmittel vorgesehen werden, so daß in Verbindung mit entsprechenden Andrückkräften absolute Gasdichtigkeit erreicht werden kann. Im allgemeinen wird aber eine sorgfältige Montage und Ausrichtung der Abdeckhaube zur Schachtöffnung genügen, um die eingangs geschilderten Nachteile zu vermeiden. Die Abdeckhaube selbst und die zugehörigen Tragteile erfordern keinen großen konstruktiven Aufwand und stellen somit eine sehr wirtschaftliche Möglichkeit dar, die mit einer offenen Montageöffnung verbundenen Unzuträglichkeiten zu vermeiden.

## Ansprüche

1. Sprühabsorber für vertikalen Gasdurchgang, bestehend im wesentlichen aus einem zylindrischen Gehäuse mit einem Gaseintrittsstutzen im Deckenbereich und einem Gasaustrittsstutzen im Bereich des unten angeschlossenen Staubsammelbunkers, einem zentrisch im Deckenbereich angeordneten Rotations-Sprühaggregat und konzentrisch dazu montierten Gasleiteinrichtungen, dadurch gekennzeichnet, daß eine heb- und schwenkbare Abdeckhaube (8) vorgesehen ist, mit der die Schachtöffnung (9) für das Rotations-Sprühaggregat (6) von unten her verschließbar ist.

2. Sprühabsorber nach Anspruch 1, dadurch gekennzeichnet, daß die Abdeckhaube (8) in eine außerhalb des Gasströmungsraumes (10) liegende Parknische (11) des Deckenbereichs (3) schwenk- und hebbar ist.

3. Sprühabsorber nach Anspruch 1 oder 2, dadurch gekennzeichnet, daß die Abdeckhaube (8) über einen Tragarm (12) mit einer vertikal angeordneten, axial verschiebbaren Welle (14) verbunden ist.

4. Sprühabsorber nach einem der Ansprüche 1 bis 3, dadurch gekennzeichnet, daß die Parknische (11) bei eingefahrener Abdeckhaube (8) durch ein am Tragarm (12) befestigtes Blech (13) abgedeckt ist.

5. Sprühabsorber nach einem der Ansprüche 1 bis 4, dadurch gekennzeichnet, daß die Welle (14) im wesentlichen außerhalb des Gehäuses (1) angeordnet und mittels Stoffbuchslager (15) durch den Deckenbereich (3) in den Gasströmungsraum (10) hineingeführt ist.

## Claims

1. A spray absorber for a vertical gas flow, essentially consisting of a cylindrical housing having a tubular gas inlet port in its top portion and adjacent to a dust-collecting bin adjoining the bottom of the housing having a tubular gas outlet port, also consisting of a rotary spraying unit which is centrically arranged in the top portion, and gas-guiding means, which are mounted concentrically to said spraying unit, characterized in that a cover hood (8) is provided, which is adapted to be lifted and to be pivotally moved and to close from underneath the shaft opening (9) for the rotary spraying unit (6).

2. A spray absorber according to claim 1, characterized in that the cover hood (8) is adapted to be pivotally moved and lifted into a parking niche (11), which is provided in the top portion (3) outside the glas flow space (10).

3. A spray absorber according to claim 1 or 2, characterized in that the cover hood (8) is connected by a carrying arm (12) to a vertical shaft (14), which is axially displaceable.

4. A spray absorber according to any of claims 1 to 3, characterized in that the parking niche (11) is covered by a sheet metal element (13), which is secured to the carrying arm (12), when the cover hood (8) has been retracted.

5. A spray absorber according to any of claims 1 to 4, characterized in that the shaft (14) is disposed substantially outside the housing (1) and extends into the gas flow space (10) through the top portion (3) in a stuffing box bearing (15).

## Revendications

1. Dispositif d'absorption par pulvérisation à passage vertical du gaz, constitué essentiellement d'une enveloppe cylindrique ayant un raccord d'entrée du gaz dans la région du sommet et un raccord de sortie des gaz dans la région de la soute collectrice de poussières qui est raccordée vers le bas, un équipement de pulvérisation par rotation monté au centre de la zone du couvercle et des dispositifs d'envoi de gaz montés concentriquement à celui-ci, caractérisé en ce qu'il est prévu une hotte de couverture (8) qui peut être soulevée et qui peut être basculée et grâce à laquelle l'ouverture du puits (9) pour l'équipement de pulvérisation par rotation (6) peut être fermée par le bas.

2. Dispositif d'absorption par pulvérisation suivant la revendication 1, caractérisé en ce que la hotte de couverture (8) peut être basculée et soulevée dans un logement (11) ménagé dans la zone du couvercle (3) et se trouvant à l'extérieur de la chambre d'écoulement du gaz (10).

3. Dispositif d'absorption par pulvérisation suivant la revendication 1 ou 2, caractérisé en ce que la hotte de couverture (8) est reliée, par un bras-support (12), à un arbre (14) monté verticalement et pouvant coulisser axialement.

4. Dispositif d'absorption par pulvérisation suivant l'une des revendications 1 à 3, caractérisé en ce que le logement (11) est recouvert, lorsque la hotte de couverture (8) est rentrée, par une tôle (13) fixée au bras support (12).

5. Dispositif d'absorption par pulvérisation suivant l'une des revendications 1 à 4, caractérisé en ce que l'arbre (14) est disposé essentiellement à l'extérieur de l'enveloppe (1) et est introduit, au moyen de presse-étoupes (15), dans la chambre d'écoulement (10), en passant à travers la zone du couvercle (3).

# Fig.1

Fig. 2

# Fig.3